## Europäisches Patentamt

## European Patent Office

## Office européen des brevets

(19)

(11) Numéro de publication: **0 076 766**
**B1**

(12) **FASCICULE DE BREVET EUROPEEN**

(45) Date de publication du fascicule du brevet:
**14.08.85**

(51) Int. Cl.⁴: **G 01 F 23/24**

(21) Numéro de dépôt: **82401832.9**

(22) Date de dépôt: **06.10.82**

(54) Perfectionnements aux dispositifs de contrôle de niveau de liquide contenu dans un réservoir.

(30) Priorité: **07.10.81 FR 8118852**

(43) Date de publication de la demande:
**13.04.83 Bulletin 83/15**

(45) Mention de la délivrance du brevet:
**14.08.85 Bulletin 85/33**

(84) Etats contractants désignés:
**DE FR GB IT**

(56) Documents cités:
**EP - A - 0 008 508**
**EP - A - 0 019 540**
**FR - A - 2 367 276**

(73) Titulaire: **JAEGER, 2, rue Baudin,
F-92303 Levallois-Perret (FR)**

(72) Inventeur: **Bezard, Jean-Jacques, 11, rue des Bois aux Petits Chênes, F-78400 Chatou (FR)**
Inventeur: **Jourdain, Charles Henri, 14, Grande Rue, F-95740 Frepillon (FR)**
Inventeur: **Lalanne, Bruno, 7 & 9, rue J.B. Charcot, F-92400 Courbevoie (FR)**

(74) Mandataire: **Martin, Jean-Jacques et al, Cabinet REGIMBEAU 26, Avenue Kléber, F-75116 Paris (FR)**

ACTORUM AG

# Description

La présente invention concerne un dispositif permettant le contrôle de niveau du liquide contenu dans un réservoir et constitue un perfectionnement au dispositif selon FR-A-2367276, un mode de réalisation dudit dispositif correspondant au préambule de la revendication 1.

On connaît déjà des dispositifs du type comprenant une sonde formée par un élément métallique résistif à coefficient de température élevé, destinée à être plongée dans le liquide d'un réservoir, un élément d'alimentation en courant de la sonde, et des moyens permettant de comparer la tension initiale Uo aux bornes de la sonde, à la tension Ut présente aux bornes de celle-ci au bout d'un temps t, pour lequel la sonde a atteint son état de stabilité thermique. Par tension initiale Uo on entend la tension présente aux bornes de la sonde à l'instant to de mise en service du dispositif d'alimentation. On sait en effet qu'un élément métallique résistif ayant un coefficient de température élevé voit sa résistance propre augmenter en fonction de sa température, et par conséquent du courant qui le traverse, ces deux derniers paramètres étant bien entendu liés. Ainsi lorsqu'un tel élément résistif est plongé dans un liquide, sa résistance propre dépend du niveau de liquide dans lequel il est plongé puisque la partie de l'élément résistif disposée au-dessus du liquide et donc exposée à l'air est bien moins refroidie que la partie immergée.

Lorsque le niveau de liquide dans lequel est plongé l'élément résistif augmente, la température moyenne dudit élément diminue, il en est donc de même de sa résistance.

Bien entendu le phénomène inverse se produit pour une diminution du niveau de liquide dans lequel est plongé l'élément résistif.

On a ainsi décrit dans FR-A-2367276 différents modes de réalisation de dispositifs de contrôle de niveau de liquide contenus dans un réservoir utilisant un tel principe.

La demande de brevet FR-A-2367276 est ici citée à titre de référence, étant entendu que l'on pourra s'y reporter pour la pleine intelligence de la présente description.

La présente invention vient maintenant proposer un nouveau dispositif de contrôle de niveau de liquide dans un réservoir qui s'avère particulièrement simple de réalisation tout en présentant une grande fiabilité et une bonne précision dans la mesure.

Le dispositif de l'invention est caractérisé dans la partie caractérisante de la revendication 1.

On comprend qu'à la fin de chaque cycle on dispose des informations relatives à la tension initiale Uo, la tension Ut et la variation de tension (Ut−Uo). Cette disposition s'avère donc particulièrement avantageuse puisqu'elle permet éventuellement d'effectuer des corrections en fonction de la valeur initiale de la tension Uo.

D'autres caractéristiques et avantages de la présente invention apparaîtront à la lecture de la description détaillée qui va suivre, et en regard du dessin annexé donné à titre d'exemple non limitatif et qui représente le schéma de principe d'un dispositif de contrôle de niveau de liquide conforme à la présente invention.

Comme cela est représenté sur le dessin, le dispositif de contrôle du niveau de liquide contenu dans un réservoir comprend une sonde 1, formée d'un élément métallique résistif à coefficient de température élevé, ladite sonde étant destinée à être plongée dans le liquide du réservoir. Cette sonde 1 est branchée entre la masse et la sortie d'un dispositif d'alimentation en courant 2. Bien entendu le dispositif d'alimentation en courant 2 pourra être constitué soit d'un générateur de courant, soit d'un générateur de tension alimentant ladite sonde 1 par l'intermédiaire d'une résistance.

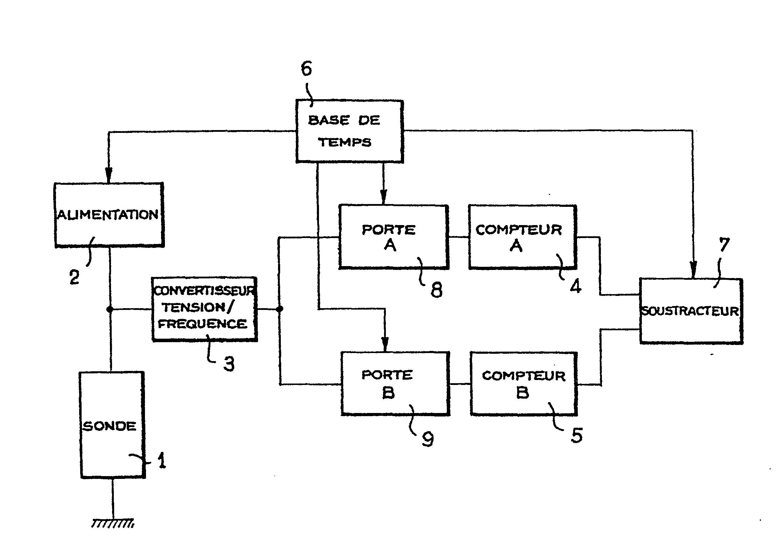

Un convertisseur tension/fréquence 3 est branché aux bornes de la sonde 1. Ce convertisseur tension/fréquence délivre à sa sortie un signal dont la fréquence est proportionnelle à la tension U présente aux bornes de la sonde 1. La sortie du convertisseur tension/fréquence 3 attaque respectivement, par l'intermédiaire de deux portes A et B (8, 9), deux compteurs A et B, référencés 4 et 5 sur la fig. 1. Le comptage des compteurs A et B (4, 5), est commandé par une base de temps 6 contrôlant les portes A, B, comme cela sera décrit plus en détail dans la suite de la présente description. Enfin un soustracteur 7 est relié en sortie des deux compteurs A, B. La base de temps 6 contrôle en outre, d'une part, la mise en service du dispositif d'alimentation 2, d'autre part, le fonctionnement du soustracteur 7.

On va maintenant décrire plus en détail le fonctionnement du dispositif du dessin.

Comme cela a été décrit dans la demande de brevet FR-A-2367276, lorsqu'on alimente en courant un fil résistant à coefficient de température élevé, celui-ci présente à ses bornes une tension de valeur initiale Uo à l'instant to de mise en service du dispositif d'alimentation. Cette tension initiale Uo dépend de la température ambiante et de la résistance des conducteurs branchés en parallèle dudit fil résistant, pour mesurer la tension. Au bout d'un temps t pour lequel la sonde a atteint son état de stabilité thermique, la tension Ut alors présente aux bornes de la sonde est toujours supérieure à la tension initiale Uo. On a constaté que la croissance de cette tension était sensiblement exponentielle. D'autre part, plus le niveau de liquide dans lequel est plongé l'élément résistif 1 augmente, plus la température moyenne dudit élément diminue du fait que la partie qui se trouve ainsi exposée à l'air diminue en fonction de l'élévation du niveau de liquide et que l'élément résistif 1 se trouve ainsi plus refroidi.

Ainsi, comme cela a été représenté sur la fig. 1 de la demande de brevet FR-A-2367276, la tension initiale Uo présente aux bornes de la sonde 1 lors de la mise en service du dispositif d'alimentation 2 est la même pour deux sondes 1 de caractéristiques strictement identiques, respectivement plongées dans un liquide et dans l'air. Par contre, au bout d'un temps t correspondant au temps au bout duquel la sonde 1 a atteint son état de stabilité thermique, la tension présente aux bornes d'une sonde 1 plongée dans un liquide sera inférieure, à courant égal, à la tension présente aux bornes de la sonde 1 située dans l'air. Une telle différence de tension est due, bien entendu, à la différence de température moyenne dudit élément résistif 1, comme cela a été précédemment décrit.

A l'instant initial to de début de cycle la base de temps 6 commande la mise en service du dispositif d'alimentation 2. Simultanément la base de temps 6 commande l'ouverture de la porte A pendant une durée donnée. Par conséquent la tension initiale Uo présente aux bornes de la sonde 1, et due au passage, à travers ledit élément résistif 1, du courant fourni par le dispositif d'alimentation 2, tension initiale qui se trouve appliquée à l'entrée du convertisseur tension/fréquence 3, fournit à la sortie de ce convertisseur 3 une fréquence proportionnelle à la tension initiale Uo présente aux bornes de la sonde. La porte A étant ouverte pendant une durée déterminée définie par la base de temps 6, on comprend que le contenu du compteur A, à la fin de l'ouverture de la porte A, est proportionnel à la tension initiale Uo. Pour cela bien entendu, ladite durée donnée pendant laquelle la base de temps 6 commande l'ouverture de la porte A et donc le comptage du compteur A doit être très inférieure au temps de montée en température de la sonde, de sorte qu'à la fin du comptage la tension présente aux bornes de la sonde soit encore très voisine de la tension initiale Uo.

La base de temps 6 maintient le fonctionnement du dispositif d'alimentation et on comprend que la tension aux bornes de la sonde 1 s'élève jusqu'à ce que l'état de stabilité thermique soit atteint. L'élévation de tension aux bornes de la sonde 1 est sensiblement inversement proportionnelle au niveau de liquide dans le réservoir. Au bout d'un temps t correspondant au temps au bout duquel la sonde a sensiblement atteint son état de stabilité thermique, la base de temps 6 commande l'ouverture de la porte B et le comptage du compteur B (5) pendant une durée déterminée égale à la durée d'ouverture de la porte A et de comptage du compteur A tel que précédemment décrit. Ainsi le contenu du compteur B (5) à la fin du comptage est proportionnel à la fréquence du signal de sortie du convertisseur tension/fréquence 3, fréquence elle-même proportionnelle à la tension Ut présente aux bornes de la sonde 1. Le contenu du compteur 3 est donc directement proportionnel à la tension Ut.

A la fin du temps d'ouverture de la porte B (9) la base de temps 6 commande alors le fonctionnement du soustracteur 7 relié en sortie des deux compteurs A, B. On comprend par conséquent que le soustracteur 7 qui fournit un signal proportionnel à la différence entre le contenu des compteurs A et B délivre une information directement proportionnelle à la valeur de l'élément de tension produite aux bornes de la sonde 1 pendant le temps t. Bien entendu une telle information peut aisément être utilisée, par exemple par comparaison avec différents niveaux prédéterminés, pour définir le niveau de liquide dans le réservoir, et par conséquent, commander si nécessaire le dispositif d'alarme approprié. Lors de l'acquisition de cette information le cycle prend fin et la base de temps 6 arrête la mise en service du dispositif d'alimentation 2. Bien entendu les portes A, B (8, 9) peuvent être supprimées, et la base de temps 6 peut être directement reliée à l'entrée d'autorisation de comptage des compteurs A et B.

Conformément à une réalisation particulière de la présente invention, on a constaté qu'il s'avérait particulièrement avantageux de réaliser le convertisseur tension/fréquence sous forme d'oscillateur à transistor unijonction programmable. Cependant un tel convertisseur tension/fréquence 3 pourra bien entendu prendre toutes formes appropriées. Il en est de même de l'ensemble des blocs fonctionnels représentés sur la figure annexée.

En particulier, on se référera à la description de la demande de brevet FR-A-2367276 pour ce qui est des circuits d'alerte ou d'indication de niveau branchés en sortie du soustracteur 7.

La présente invention s'applique notamment à la mesure de niveau de liquide dans les réservoirs de véhicule et en particulier au niveau d'huile ou de carburant.

Bien entendu, la présente invention n'est pas limitée aux modes de réalisation qui viennent d'être décrits à partir desquels on pourra prévoir d'autres formes et d'autres modes de réalisation sans pour cela sortir du cadre de la présente invention. En particulier on pourra prévoir un circuit différent en sortie du soustracteur 7 pour mémoriser l'information disponible à la sortie de celui-ci lorsque le cycle décrit précédemment est répété à intervalles réguliers, lesdits intervalles étant suffisamment longs pour permettre le refroidissement de la sonde 1 avant chaque nouvelle mesure et le soustracteur 7 étant lui-même remis rapidement à zéro avant chaque nouvelle entrée d'informations.

## Revendications

1. Dispositif de contrôle du niveau de liquide contenu dans un réservoir délivrant un signal de sortie représentatif du niveau de liquide, du type comportant une sonde (1) formée d'un élément métallique résistif à coefficient de température élevé, un dispositif d'alimentation (2) en courant de la sonde, et des moyens permettant de comparer la tension initiale Uo mesurée aux bornes de la sonde à l'instant to de mise en service du dispositif d'alimentation, avec la tension Ut mesurée aux bornes de la même sonde à l'instant t, de stabilité thermique, lesdits moyens de comparaison comprenant un premier (4) et un deuxième (5) compteur et une base de temps (6), caractérisé par le fait que les moyens de comparaison comportent en outre un convertisseur tension/fréquence (3) et un soustracteur (7),
— le convertisseur tension/fréquence (3) ayant l'entrée connectée aux bornes de la sonde (1),
— le premier (4) et le deuxième (5) compteur étant reliés en parallèle à la sortie du convertisseur tension/fréquence (3),
— la base de temps (6) étant apte à commander, d'une part, le comptage d'un premier compteur (4) pendant une durée donnée, et ce dès l'instant to de mise en service du dispositif d'alimentation (2), le contenu du premier compteur (4) à la fin du comptage étant ainsi représentatif de la tension Uo, d'autre part, le comptage du deuxième compteur (5) pendant la même durée donnée, et ce au bout d'un temps t pour lequel la sonde (1) a atteint son état de stabilité thermique, le contenu du deuxième compteur (5) à la fin de la durée de comptage étant ainsi représentatif de la tension Ut, — le soustracteur (7) relié à la sortie des deux compteurs (4, 5) étant commandé par la base de temps (6), pour délivrer ledit signal de sortie, ce signal étant proportionnel à la différence entre le contenu des deux compteurs.

2. Dispositif selon la revendication 1, caractérisé par le fait qu'un circuit d'alerte est branché en sortie du soustracteur (7).

3. Dispositif selon la revendication 1, caractérisé par le fait qu'un circuit d'affichage de niveau de liquide est branché en sortie du soustracteur (7).

4. Dispositif selon l'une des revendications 1 ou 2, caractérisé par le fait qu'il est prévu un circuit en sortie du soustracteur (7) pour mémoriser l'information disponible à la sortie de celui-ci, ce qui permet de remettre le soustracteur à zéro en vue d'une nouvelle mesure.

5. Dispositif selon l'une des revendications 1 à 4, caractérisé par le fait que le convertisseur tension/fréquence (3) est un oscillateur à transistor unijonction programmable.

## Claims

1. An apparatus for monitoring the level of liquid in a tank or reservoir, generating an output signal representative of the level of liquid, of the type comprising a probe (1) formed by a resistive metal element having a high temperature coefficient, a means (2) for supplying current to the probe, and means for comparing the initial voltage Uo measured at the terminals of the probe at the time at which the current supply means is set in operation, to the voltage Ut measured at the terminals of the said probe at the time t when there is a condition of thermal stability, said means for comparing comprising a first (4) and a second (5) counters and a time base (6), characterised in that said comparison means moreover comprise a voltage-frequency converter (3) and a substracting means (7)
— .the voltage-frequency converter (3) having its input connected to the terminals of the probe (1),
— the first (4) and the second (5) counters being connected in parallel to the output of the voltage-frequency converter (3),
— the time-base (6) being adapted to control the first counter (4) to count for a given period of time, from the moment to at which the current supply means (2) is set in operation, the content of the first counter (4) at the end of the counting operation thus representing the voltage Uo, and controlling the second counter (5) to count for the same given period of time, at a time t when the probe (1) has attained its condition of thermal stability, the content of the second counter (5) at the end of the counting period thus representing the voltage Ut, and
— the subtracting means (7) which is connected to the output of the two counters (4, 5) being controlled by the time base (6) for producing the output signal, said output signal being proportional to the difference between the contents of the two counters.

2. Apparatus according to Claim 1, characterised in that a warning circuit is connected to the output of the subtracting means (7).

3. Apparatus according to Claim 1, characterised in that a liquid level display circuit is connected to the output of the subtracting means (7).

4. Apparatus according to one of Claims 1 or 2, characterised in that the subtracting means (7) is connected to an output circuit for memorizing the information available at the output thereof, which permits the subtracting means to be reset to zero for a fresh measuring operation.

5. Apparatus according to one of Claims 1 to 4, characterised in that the voltage-frequency converter (3) is a programmable unijunction transistor type oscillator.

## Patentansprüche

1. Niveaukontrollapparat für Flüssigkeiten in einem Reservoir, der ein das Flüssigkeitsniveau darstellendes Ausgangssignal liefert und von einem Typ ist, der eine Sonde (1) aufweist, die aus einem metallischen Element mit hohem Temperaturkoeffizienten gebildet ist, mit einer Stromversorgungseinrichtung (2) für die Sonde und mit Mitteln, die es ermöglichen, die an den Anschlüssen der Sonde zum Zeitpunkt to des Einschaltens der Stromversorgungseinrichtung gemessene Anfangsspannung Uo mit der Spannung Ut zu vergleichen, die an den Anschlüssen der gleichen Sonde zum Zeitpunkt t, der thermischen Stabilität, gemessen wird, bei dem die dem Vergleich dienenden Mittel einen ersten (4) und einen zweiten (5) Zähler und eine Zeitbasis (6) aufweisen, dadurch gekennzeichnet, dass die dem Vergleich dienenden Mittel ausserdem einen Spannungs/Frequenz-Wandler (3) und einen Subtrahierer (7) aufweisen,
— der Spannungs/Frequenz-Wandler (3) mit seinem Eingang mit den Anschlüssen der Sonde (1) verbunden ist,
— der erste (4) und der zweite (5) Zähler zueinander parallel mit dem Ausgang des Spannungs/Frequenz-Wandlers (3) verbunden sind,
— die Zeitbasis (6) in der Lage ist, einerseits den Zählvorgang des ersten Zählers (4) für einen gegebenen Zeitraum in Gang zu setzen, und dies vom Zeitpunkt to des Einschaltens der Stromversorgungseinrichtung (2) an, so dass der Inhalt des ersten Zählers (4) am Ende des Zählvorgangs die Spannung Uo darstellt, andererseits den Zählvorgang des zweiten Zählers (5) für den gleichen Zeitraum in Gang zu setzen, und dies nach Ablauf einer Zeitdauer t, in der die Sonde (1) ihren Zustand der thermischen Stabilität erreicht hat, so dass der Inhalt des zweiten Zählers (5) am Ende der Dauer des Zählvorgangs die Spannung Ut darstellt,
— dass der an den Ausgang der beiden Zähler (4, 5) angeschlossene Subtrahierer (7) von der Zeitbasis (6) gesteuert ist, um das besagte Ausgangssignal abzugeben, welches der Differenz zwischen dem Inhalt der beiden Zähler proportional ist.

2. Apparat nach Anspruch 1, dadurch gekennzeichnet, dass eine Alarmschaltung an den Ausgang des Subtrahierers (7) angeschlossen ist.

3. Apparat nach Anspruch 1, dadurch gekennzeichnet, dass an den Ausgang des Subtrahierers (7) eine Schaltung zum Anzeigen des Flüssigkeitsniveaus angeschlossen ist.

4. Apparat nach Anspruch 1 oder 2, dadurch gekennzeichnet, dass am Ausgang des Subtrahierers (7) eine Schaltung vorgesehen ist, um die am Ausgang desselben verfügbare Information zu speichern, was ermöglicht, den Subtrahierer für eine neue Messung zurückzustellen.

5. Apparat nach einem der Ansprüche 1 bis 4, dadurch gekennzeichnet, dass der Spannungs/Frequenz-Wandler (3) ein programmierbarer Oszillator mit einem Unijunktionstransistor ist.